# DEMANDE DE BREVET EUROPEEN

(11) **EP 4 722 040 A1**
(43) Date de publication de la demande: **08.04.2026**
(21) Numéro de dépôt: 25207082.6
(22) Date de dépôt: 07.10.2025
(51) Int. Cl.: B60Q 1/00, B60R 13/00, F21S 43/237, F21S 43/245, F21S 43/20, F21S 43/31, F21S 43/40, F21S 43/50, H01Q 1/42, G01S 13/931

(54) **ELEMENT DE GARNISSAGE COMPRENANT UN LOGO RÉTROÉCLAIRÉ ET UN RADAR**

(30) Priorité: 07.10.2024 FR 2410803
(71) Demandeur: Flex-N-Gate France, 25405 Audincourt (FR)
(72) Inventeur: PUJOL, Olivier, 90000 BELFORT (FR); BERGERAT, Stéphanie, 25405 AUDINCOURT (FR)
(74) Mandataire: Lavoix

(57) **Abrégé**

La présente invention concerne un élément de garnissage (10) de véhicule comprenant ;
- un boîtier (12) s'étendant selon une direction d'épaisseur entre un élément de support (14) et un élément de décor (20),
- un radar (30) émettant un rayonnement électromagnétique selon la direction d'épaisseur, ledit radar (30) étant disposé à l'extérieur du boîtier (12), le rayonnement électromagnétique traversant ledit boîtier dans une zone d'émission,
- une source lumineuse (32) s'étendant dans le boîtier, ladite source lumineuse (32) émettant un rayonnement lumineux dans le domaine visible,
caractérisé en ce que la source lumineuse (32) s'étend autour de la zone d'émission et éclaire l'élément de décor (20), une partie du rayonnement lumineux étant réfléchie dans le boîtier (12) de sorte à orienter ladite partie du rayonnement selon la direction d'épaisseur dans la zone d'émission.

## Description

La présente invention concerne un élément de garnissage de véhicule comprenant ;
- un boîtier s'étendant selon une direction d'épaisseur entre un élément de support et un élément de décor,
- un radar émettant un rayonnement électromagnétique selon la direction d'épaisseur, ledit radar étant disposé à l'extérieur du boîtier du côté de l'élément de support, le rayonnement électromagnétique traversant ledit boîtier de l'élément de support à l'élément de décor dans une zone d'émission,
- une source lumineuse s'étendant dans le boîtier entre l'élément de support et l'élément de décor, ladite source lumineuse émettant un rayonnement lumineux dans le domaine visible.

L'invention concerne par exemple un élément de garnissage comprenant un motif rétroéclairé inséré dans un élément de carrosserie de véhicule, par exemple à la façon d'un médaillon.

On connait des éléments de garnissage rétroéclairés, le rétroéclairage étant agencé par exemple pour faire ressortir un symbole, par exemple le logo du constructeur ou un autre élément distinctif. De tels éléments de garnissage comprennent par exemple un boîtier recevant la source de lumière permettant le rétroéclairage.

Il est également connu d'équiper un véhicule d'un ou plusieurs radars par exemple pour détecter les obstacles autour du véhicule et assister la conduite de celui-ci. Un tel radar est par exemple positionné au voisinage de la surface interne d'un élément de garnissage externe de véhicule afin d'émettre un rayonnement électromagnétique vers l'extérieur du véhicule tout en étant invisible depuis l'extérieur du véhicule.

Cependant, l'intégration d'un tel radar avec un élément de garnissage rétroéclairé est compliquée, notamment du fait de l'encombrement généré par la présence du radar et de la source lumineuse permettant le rétroéclairage et du fait de la perturbation qu'est susceptible de causer la présence, dans le trajet de l'onde émise par le radar, de pièces opaques au rayonnement électromagnétique ou de pièces dont la géométrie peut modifier ce trajet. Une telle perturbation est susceptible de dégrader le fonctionnement du radar et de nuire à ses capacités de détection.

L'un des buts de l'invention est de proposer un élément de garnissage rétroéclairé et pourvu d'un radar peu encombrant et fonctionnant de façon satisfaisante.

A cet effet, l'invention a pour objet un élément de garnissage de véhicule comprenant ;
- un boîtier s'étendant selon une direction d'épaisseur entre un élément de support et un élément de décor,
- un radar émettant un rayonnement électromagnétique selon la direction d'épaisseur, ledit radar étant disposé à l'extérieur du boîtier du côté de l'élément de support, le rayonnement électromagnétique traversant ledit boîtier de l'élément de support à l'élément de décor dans une zone d'émission,
- une source lumineuse s'étendant dans le boîtier entre l'élément de support et l'élément de décor, ladite source lumineuse émettant un rayonnement lumineux dans le domaine visible,
caractérisé en ce que la source lumineuse s'étend autour d'au moins une partie de la zone d'émission et éclaire l'élément de décor selon la direction d'épaisseur, au moins une partie du rayonnement lumineux étant réfléchie dans le boîtier par l'élément de support de sorte à orienter ladite partie du rayonnement selon la direction d'épaisseur dans la zone d'émission.

L'utilisation de l'élément de support comme surface de réflexion de la lumière permet de réaliser un élément de garnissage rétroéclairé en déportant la source lumineuse hors de la zone d'émission du radar afin que le rayonnement électromagnétique qu'émet le radar ne soit pas perturbé par les composants du système d'éclairage. Ainsi, le radar peut être placé immédiatement derrière le boitier, rendant l'élément de garnissage plus compact.

L'élément de garnissage selon l'invention peut également comprendre une ou plusieurs des caractéristiques suivantes, prises isolément ou selon toute combinaison techniquement envisageable :
- L'élément de support s'étend selon la direction d'épaisseur du boîtier , entre une face externe et une face interne, tournée vers l'intérieur du boîtier, le radar s'étendant en regard de la face externe et émettant un rayonnement électromagnétique traversant l'élément de support depuis la face externe vers la face interne, l'élément de support étant transparent au rayonnement électromagnétique émis par le radar, au moins une partie de la face interne réfléchissant la lumière dans le domaine visible de sorte que la lumière émise par la source lumineuse est réfléchie par ladite partie de la face interne selon la direction d'épaisseur vers l'élément de décor.
- L'élément de décor s'étend selon la direction d'épaisseur du boîtier entre une face interne tournée vers l'intérieur du boîtier et une face externe, l'élément de décor étant transparent au rayonnement électromagnétique de la face interne à la face externe et diffusant la lumière dans le domaine visible.
- Un masque est appliqué sur la face interne ou la face externe de l'élément de décor, ledit masque définissant un motif comprenant au moins une zone opaque et une zone laissant passer la lumière.
- Au moins une partie du motif s'étend en regard de la zone d'émission de sorte à être traversée par le rayonnement électromagnétique.
- La source lumineuse comprend au moins une source de lumière injectant de la lumière dans le guide de lumière, le guide de lumière s'étendant entre l'élément de support et l'élément de décor autour d'au moins une partie de la zone d'émission dans un plan radial perpendiculaire à la direction d'épaisseur du boîtier.
- La source lumineuse comprend deux guides de lumière s'étendant de part et d'autre de la zone d'émission dans le plan radial.
- Les deux guides de lumière s'étendent chacun entre deux extrémités, chaque extrémité d'un guide de lumière étant reliée à l'extrémité correspondante de l'autre guide de lumière par un élément de liaison portant une source de lumière et s'étendant en dehors de la zone d'émission.
- La zone d'émission est entièrement incluse dans l'espace situé entre les deux guides de lumière dans le plan radial.
- Le boîtier (12) est fermé de façon étanche entre l'élément de support (14) et l'élément de décor (20).

L'invention apparaîtra plus clairement à la lecture de la description qui va suivre, donnée uniquement à titre d'exemple non limitatif, et faite en référence aux dessins dans lesquels :
[Fig. 1] la figure 1 est une première représentation schématique en coupe d'un élément de garnissage selon l'invention,
[Fig. 2] la figure 2 est une vue schématique en éclaté de l'élément de garnissage selon l'invention,
[Fig. 3] la figure 3 est une deuxième représentation schématique en coupe de l'élément de garnissage selon l'invention.

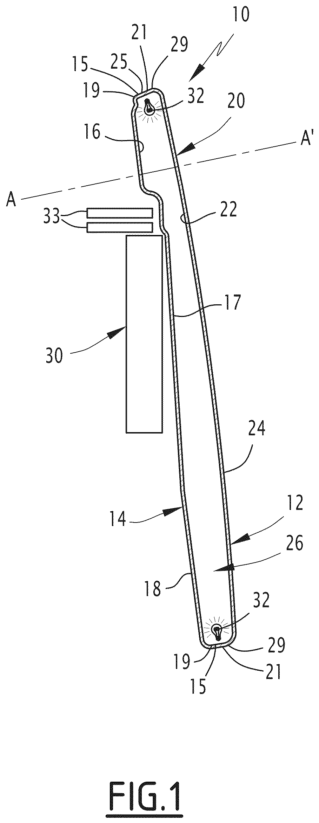

En référence à la figure 1, on décrit un élément de garnissage 10 pour un véhicule comprenant un boîtier 12 s'étendant selon une direction d'épaisseur notée A-A' et un radar 30 situé à l'extérieur du boîtier 12.

Le boîtier 12 comprend un élément de support 14 et un élément de décor 20 assemblés l'un à l'autre pour former le boîtier 12 en définissant un volume interne 26 entre eux, le volume interne 26 recevant une source lumineuse 32.

L'élément de support 14 s'étend selon la direction d'épaisseur A-A' entre une face interne 16 tournée vers l'intérieur du boîtier et une face externe 18, opposée à la face interne 16 et destinée à être tournée vers le véhicule lorsque l'élément de garnissage 10 est monté sur le véhicule.

Par la suite, le terme « transparent » sera utilisé pour décrire un matériau qui laisse passer un rayonnement au moins selon la direction d'épaisseur A-A'. Le rayonnement peut être une lumière visible ou un rayonnement électromagnétique.

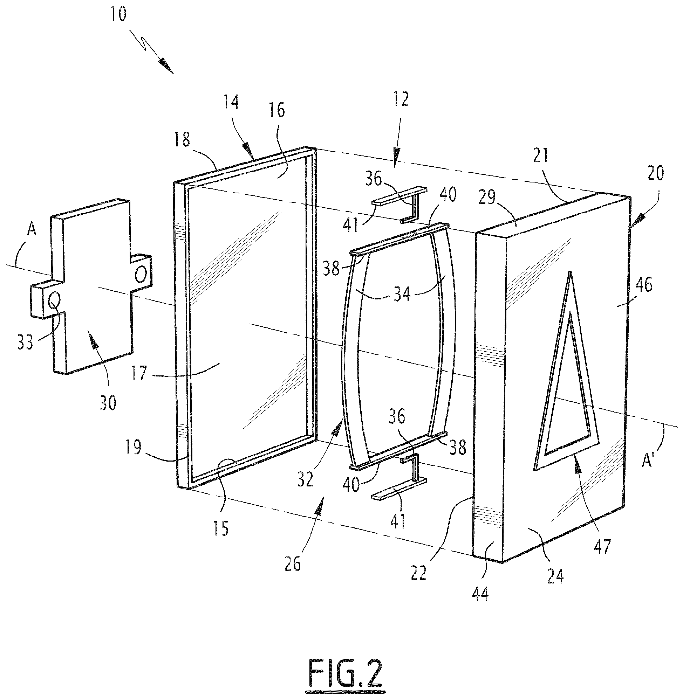

Au moins une partie de la face interne 16 de l'élément de support 14 forme une zone diffusante 17, qui diffuse au moins une partie d'une lumière visible incidente émise par la source lumineuse 32 vers la face interne 16 de l'élément de support 14 et pour orienter cette lumière vers l'élément de décor 20 selon la direction d'épaisseur. Comme représenté sur la figure 2, l'élément de support 14 comprend sur sa face interne 16, un bord 15 comprenant par exemple une nervure 19 s'étendant en saillie de la face interne 16 selon la direction d'épaisseur A-A'. La nervure 19 s'étend par exemple le long de l'ensemble du bord 15 de la face interne 16 et entoure tout ou partie de la zone diffusante 17. La nervure 19 définit ainsi une empreinte à l'intérieur de laquelle s'étend la zone diffusante 17.

L'élément de support 14 est par exemple réalisé en polycarbonate blanc de sorte que sa face interne 16 est entièrement diffusante. En variante, la zone diffusante 17 est réalisée dans un matériau distinct de celui de l'élément de support 14, par exemple sous la forme d'une couche de matériau réfléchissant déposée sur la face interne 16.

Une épaisseur e3 de l'élément de support 14 est définie comme étant la distance séparant la face interne 16 et la face externe 18, cette épaisseur e3 est par exemple comprise entre 2 et 3 millimètres, par exemple sensiblement égale à 2,3 millimètres.

En variante, la zone diffusante 17 recouvre sensiblement l'entièreté de la face interne 16 de l'élément de support 14.

L'élément de décor 20 s'étend également selon la direction d'épaisseur A-A', entre une face interne 22 disposée en regard de la face interne 16 de l'élément de support 14 et une face externe 24 opposée à la face interne 22. La face externe 24 de l'élément de décor 20 est ainsi destinée à être tournée vers l'extérieur du véhicule et à être visible depuis l'extérieur du véhicule. L'élément de décor 20 comprend un corps 44 entre sa face interne 22 et sa face externe 24. Selon un mode de réalisation, la face externe 24 de l'élément de décor 20 forme une partie de la surface externe de la carrosserie du véhicule.

Avantageusement, le corps 44 de l'élément de décor 20 est fait d'un matériau diffusant.

Par « matériau diffusant », on entend un matériau qui, lorsqu'il reçoit un rayonnement visible, diffuse ce rayonnement dans l'épaisseur de l'élément de décor.

Dans un cas particulier, le corps 44 est réalisé en polymère et mis en forme par injection plastique. Le polymère est par exemple du polycarbonate ou du poly méthacrylate de méthyle acrylique.

La figure 2 illustre un élément de décor 20 comprenant un bord 21. Le bord 21 comprend une nervure 29 qui s'étend en saillie de la face interne 22 selon la direction d'épaisseur A-A'.

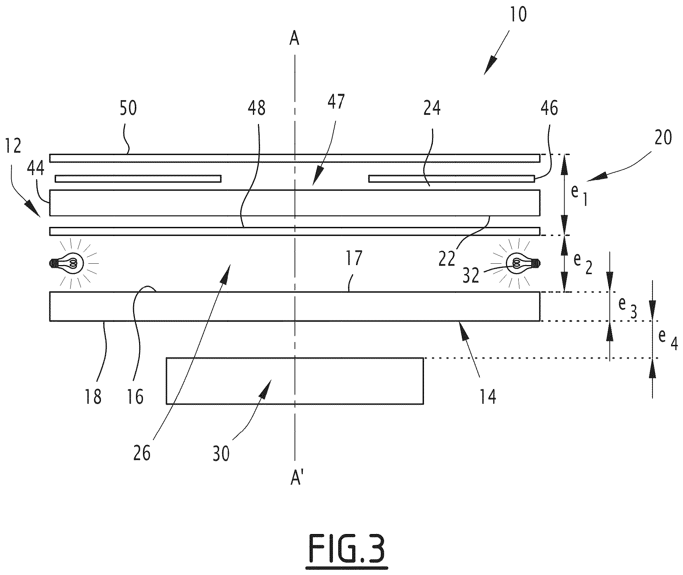

Selon un mode de réalisation, l'élément de décor 20 comprend, sur sa face externe 24, un masque 46 opaque, c'est-à-dire qui empêche le passage de la lumière à travers la face externe 24. Le masque 46 et le corps 44 définissent au moins un motif 47, tel que visible sur la figure 3. Par exemple le motif 47 forme un logo ou un caractère alphanumérique. Au moins une partie du motif 47 laisse passer la lumière afin de former un motif 47 rétroéclairé. Plus particulièrement, la zone du corps 44 n'étant pas recouverte par le masque 46 laisse passer la lumière et forme ainsi une zone rétroéclairée dont la forme est définie par le masque s'étendant autour de tout ou partie de la zone rétroéclairée.

En variante, le masque 46 est situé sur la face interne 22 de l'élément de décor 20.

Selon un mode de réalisation, l'élément de décor 20 comprend en outre un vernis 48 de protection contre la condensation. La condensation de l'eau présente dans l'air mène à l'apparition de gouttelettes sur la face interne du corps 44 diffusant. Ces gouttelettes perturbent le trajet optique et dégradent l'aspect du motif 47 rétroéclairé. Un tel vernis 48 protège de la buée par exemple en empêchant les gouttelettes d'eau d'adhérer à la face interne 22.

Selon un autre mode de réalisation de l'invention, l'élément de décor 20 comprend, sur sa face externe 24 un vernis de finition 50. Le vernis de finition 50 laisse passer la lumière visible provenant de la face interne 22 vers la face externe 24. Le vernis de finition 50 améliore l'aspect de l'élément de décor 20 en conférant à sa face externe 24 un aspect brillant. Le vernis de finition 50 améliore également la planéité de la face externe 24, en particulier lorsqu'un masque 46 se situe sur le corps 44 du côté de la face externe 24.

L'épaisseur e1 de l'élément de décor 20 est par exemple comprise entre 2 et 3 millimètres, par exemple sensiblement égale à 2.4 millimètres.

En référence à la figure 1, le boîtier 12 est fermé par une jonction 25 entre l'élément de support 14 et l'élément de décor 20. La jonction 25 est formée, du côté de l'élément de support 14, par la nervure 19 du bord 15 et du côté de l'élément de décor, par la nervure 29 du bord 21.

Selon un certain mode de réalisation, la jonction 25 est hermétique, le boîtier 12 étant ainsi étanche. Cette caractéristique permet de protéger les différents éléments contenus dans le boîtier 12, notamment de la poussière ou de l'humidité extérieure, et contribue au bon fonctionnement de l'élément de garnissage 10 sur la durée. L'étanchéité de la jonction 25 peut notamment être assurée en incluant un joint dans le bord 15 de l'élément de support 14 et/ou dans le bord 21 de l'élément de décor 20. En variante, l'étanchéité de la jonction 25 est assurée par une colle assurant la liaison entre le bord 15 de l'élément de support 14 et le bord 21 de l'élément de décor 20.

Le radar 30 est disposé à l'extérieur du boîtier 12, tel que représenté sur la figure 2, du côté de la face externe 18 de l'élément de support 14, à une distance e4 de la face externe 18 selon la direction d'épaisseur A-A'. La distance e4 est par exemple comprise entre 1,6 et 10 millimètres, par exemple sensiblement égale à 2 millimètres. Le radar 30 émet un rayonnement électromagnétique selon la direction d'épaisseur A-A'. Le radar 30 est plus particulièrement orienté de sorte que la zone d'émission du rayonnement électromagnétique traverse le boîtier 12 de sorte à former une zone de détection s'étendant à l'extérieur du boîtier 12 du côté de la face externe 24 de l'élément de décor 20. A cet effet, l'élément de support 14 et l'élément de décor 20 sont transparents au rayonnement électromagnétique du radar 30.

Le rayonnement émis par le radar définit une zone d'émission, présentant par exemple la forme d'un cône d'émission, traversant le boîtier 12. La zone d'émission s'étend en regard du radar 30 selon la direction d'épaisseur A-A' et traverse l'élément de support 14, le volume interne 26 et l'élément de décor 20 du boîtier. De préférence la zone d'émission du rayonnement électromagnétique du radar 30 traverse au moins une partie du motif 47.

Le radar 30 possède avantageusement une connexion 33, de préférence démontable, permettant de fixer le radar 30 sur une pièce du véhicule, par exemple un élément lié au pare-chocs du véhicule. Ainsi, le radar 30 peut être retiré du véhicule aisément, ce qui facilite les opérations de maintenance.

En variante, le radar 30 est fixé au boîtier 12 par l'intermédiaire de la connexion 33, ce qui permet d'accéder au radar 30 en retirant le boîtier 12.

L'épaisseur du radar 30 prise selon la direction d'épaisseur A-A' est de préférence comprise entre 9 et 10 millimètres, par exemple égale à 9,7 millimètres.

La source lumineuse 32 émet une lumière visible au moins partiellement en direction de la zone diffusante 17 de l'élément de support 14, de sorte qu'au moins une partie de la lumière visible soit réfléchie par la zone réfléchissante vers la face interne 22 de l'élément de décor 20. La zone diffusante 17 agit ainsi comme une source de lumière surfacique, s'étendant en regard de l'élément de décor 20 selon la direction d'épaisseur A-A', lorsqu'une lumière lui est incidente.

La source lumineuse 32 comprend au moins un guide de lumière 34, destiné à diffuser la lumière visible issue d'une source de lumière 36. Le guide de lumière 34 de l'élément de garnissage 10 est compris dans un espace s'étendant entre la face interne 16 de l'élément de support 14 et la face interne 22 de l'élément de décor 20, et étant situé dans le volume interne 26 du boitier. Le guide de lumière 34 s'étend alors au moins partiellement autour de la zone d'émission du rayonnement électromagnétique du radar 30, dans un plan radial perpendiculaire à la direction d'épaisseur A-A'.

Le guide de lumière 34 est situé dans l'espace entre la face interne 22 de l'élément de décor 20 et la face interne 16 de l'élément de support 14, l'espace est caractérisé par une épaisseur e2 selon la direction d'épaisseur A-A'. L'épaisseur e2 est comprise entre 4 et 6 mm, de préférence sensiblement égale à 5mm. Une telle distance permet d'éviter la condensation à l'intérieur du boîtier 12 tout en assurant la compacité du système.

Dans le mode de réalisation représenté à la figure 3, la source lumineuse32 comprend deux guides de lumière 34 s'étendant de part et d'autre de la zone d'émission du rayonnement électromagnétique du radar 30. Les deux guides de lumière 34 s'étendent selon un même plan radial perpendiculaire à l'axe d'épaisseur A-A' et épousent la forme du bord 15 de l'élément de support 14 et/ou du bord 21 de l'élément de décor 20, par exemple en étant appliqués contre la jonction 25. Les deux guides de lumière 34 s'étendent chacun entre deux extrémités 38. Chaque extrémité 38 d'un guide de lumière 34 est reliée à l'extrémité 38 correspondante de l'autre guide de lumière 34, par l'intermédiaire d'un élément de liaison 40.

Avantageusement, l'élément de liaison 40 comporte une source de lumière 36, la source de lumière 36 étant par exemple une LED (diode électroluminescente ou light-emitting diode en anglais). L'élément de liaison 40 inclut par exemple un circuit imprimé 41 comportant une pluralité de chemins électriques permettant d'alimenter la source de lumière 36, grâce à une source d'énergie, non représentée.

Dans le mode de réalisation représenté sur la figure 3, le ou chaque guide de lumière 34 a une section circulaire et s'étend sensiblement selon la jonction 25 entre l'élément de support 14 et l'élément de décor 20. Le guide de lumière 34 ainsi formé présente ainsi une forme de section circulaire, qui permet de diffuser de manière homogène la lumière qui est destinée à être injectée dans le guide de lumière 34. La lumière provenant d'une source de lumière 36 est localisée à l'une des extrémités d'un guide de lumière 34, le guide de lumière 34 diffuse cette lumière au moins partiellement en direction de la zone diffusante 17 de l'élément de support 14. De préférence, le guide de lumière est réalisé en un matériau transparent.

La zone d'émission du radar 30 est au moins partiellement inclue dans l'espace situé entre les deux guides de lumière 34, et est de préférence entièrement inclue dans l'espace situé entre les deux guides de lumière 34. En d'autre termes, les guides de lumière 34 ne s'étendent pas et n'intersectent pas la zone d'émission du radar 30. La lumière visible assurant le rétroéclairage du motif 47 ne provient pas directement des guides de lumière 34 mais résulte de la réflexion de la lumière visible provenant des guides de lumière 34 sur la zone diffusante 17.

L'élément de garnissage 10 selon l'invention permet donc d'intégrer un radar 30 derrière un boîtier 12, de manière compacte grâce à une faible épaisseur du boîtier dans la direction d'épaisseur A-A'. L'utilisation de l'élément de support 14, à la fois comme partie inférieur du boîtier 12 et comme élément de réflexion de la lumière visible contribue à la réduction du nombre de couches composant l'élément de garnissage 10. La position avantageuse du radar 30 derrière le boîtier 12 permet un accès facile au radar 30 à des fins de maintenance sans devoir désassembler le boîtier 12.

L'utilisation de guides de lumière 34 de forme longiligne pour produire un éclairage grâce à une zone diffusante 17 contribue à la compacité de l'élément de garnissage 10 ainsi qu'à une meilleure qualité perçue du motif 47 rétroéclairé.

## Revendications

1. Elément de garnissage (10) de véhicule comprenant ;
- un boîtier (12) s'étendant selon une direction d'épaisseur entre un élément de support (14) et un élément de décor (20),
- un radar (30) émettant un rayonnement électromagnétique selon la direction d'épaisseur, ledit radar (30) étant disposé à l'extérieur du boîtier (12) du côté de l'élément de support (14), le rayonnement électromagnétique traversant ledit boîtier de l'élément de support (14) à l'élément de décor (20) dans une zone d'émission,
- une source lumineuse (32) s'étendant dans le boîtier entre l'élément de support (14) et l'élément de décor (20), ladite source lumineuse (32) émettant un rayonnement lumineux dans le domaine visible,
**caractérisé en ce que** la source lumineuse (32) s'étend autour d'au moins une partie de la zone d'émission et éclaire l'élément de décor (20) selon la direction d'épaisseur, au moins une partie du rayonnement lumineux étant réfléchie dans le boîtier (12) par l'élément de support (14) de sorte à orienter ladite partie du rayonnement selon la direction d'épaisseur dans la zone d'émission.

2. Elément de garnissage (10) de véhicule selon la revendication 1, dans lequel l'élément de support (14) s'étend selon la direction d'épaisseur du boîtier (12), entre une face externe (18) et une face interne (16), tournée vers l'intérieur du boîtier, le radar s'étendant en regard de la face externe (18) et émettant un rayonnement électromagnétique traversant l'élément de support (14) depuis la face externe (18) vers la face interne (16), l'élément de support (14) étant transparent au rayonnement électromagnétique émis par le radar, au moins une partie de la face interne (16) réfléchissant la lumière dans le domaine visible de sorte que la lumière émise par la source lumineuse est réfléchie par ladite partie de la face interne selon la direction d'épaisseur vers l'élément de décor.

3. Elément de garnissage (10) de véhicule selon la revendication 1 ou 2, dans lequel l'élément de décor (20) s'étend selon la direction d'épaisseur du boîtier (12) entre une face interne (22) tournée vers l'intérieur du boîtier et une face externe (24), l'élément de décor (20) étant transparent au rayonnement électromagnétique de la face interne (22) à la face externe (24) et diffusant la lumière dans le domaine visible.

4. Elément de garnissage (10) de véhicule selon l'une quelconque des revendications précédentes, dans lequel un masque (46) est appliqué sur la face interne (22) ou la face externe (24) de l'élément de décor, ledit masque définissant un motif (47) comprenant au moins une zone opaque et une zone laissant passer la lumière.

5. Elément de garnissage (10) de véhicule selon la revendication 4, dans lequel au moins une partie du motif (47) s'étend en regard de la zone d'émission de sorte à être traversée par le rayonnement électromagnétique.

6. Elément de garnissage (10) de véhicule selon l'une quelconque des revendications précédentes, dans lequel la source lumineuse (32) comprend au moins une source de lumière (36) injectant de la lumière dans le guide de lumière (34), le guide de lumière (34) s'étendant entre l'élément de support (14) et l'élément de décor (20) autour d'au moins une partie de la zone d'émission dans un plan radial perpendiculaire à la direction d'épaisseur du boîtier (12).

7. Elément de garnissage (10) de véhicule selon la revendication 6, dans lequel la source lumineuse (32) comprend deux guides de lumière (34) s'étendant de part et d'autre de la zone d'émission dans le plan radial.

8. Elément de garnissage (10) de véhicule selon la revendication 7, dans lequel les deux guides de lumière (34) s'étendent chacun entre deux extrémités, chaque extrémité d'un guide de lumière (34) étant reliée à l'extrémité correspondante de l'autre guide de lumière (34) par un élément de liaison (40) portant une source de lumière (36) et s'étendant en dehors de la zone d'émission.

9. Elément de garnissage (10) de véhicule selon l'une quelconque des revendications 7 ou 8, dans lequel la zone d'émission est entièrement incluse dans l'espace situé entre les deux guides de lumière (34) dans le plan radial.

10. Elément de garnissage (10) de véhicule selon l'une quelconque des revendications précédentes, dans lequel le boîtier (12) est fermé de façon étanche entre l'élément de support (14) et l'élément de décor (20).
